(19) **Europäisches Patentamt / European Patent Office / Office européen des brevets**

(11) **EP 3 193 480 A1**

(12) **EUROPÄISCHE PATENTANMELDUNG**

(43) Veröffentlichungstag:
19.07.2017 Patentblatt 2017/29

(51) Int Cl.:
$H04L\ 27/227^{(2006.01)}$      $H04L\ 27/26^{(2006.01)}$
$H04L\ 27/22^{(2006.01)}$      $H04L\ 27/00^{(2006.01)}$

(21) Anmeldenummer: 17152049.7

(22) Anmeldetag: 18.01.2017

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
MA MD

(30) Priorität: 18.01.2016 DE 102016100712

(71) Anmelder: Airbus Defence and Space GmbH
82024 Taufkirchen (DE)

(72) Erfinder:
• RIETH, Dominik
85521 Ottobrunn (DE)
• HELLER, Christoph
82024 Taufkirchen (DE)

(74) Vertreter: Kastel, Stefan
Kastel Patentanwälte
St.-Cajetan-Straße 41
81669 München (DE)

(54) **CONTINOUS-PHASE-MODULATION-DEMODULATIONSVERFAHREN UND CONTINOUS-PHASE-MODULATION-DEMODULATOR**

(57) Zur Erzielung eines CPM-Demodulators mit besserer Hardware-Effizienz schafft die Erfindung ein Continous-Phase-Modulation-Demodulationsverfahren zum Demodulieren eines mit koninuierlicher Phasenmodulation modulierten CPM-Signals, umfassend Durchführen einer Phasenkorrektur, Durchführung einer Optimalfilterung mittels eines Optimalfilters ,MF, und Durchführen einer Maximum-Likelihood-Sequence-Detektion des Signals,

dadurch gekennzeichnet,

dass die Optimalfilterung vor der Phasenkorrektur durchgeführt wird und/oder dass bei der Optimalfilterung anstelle von Multiplikationen Summen von Bruchteilen von 2 verwendet werden.

Fig. 3

EP 3 193 480 A1

**Beschreibung**

Die Erfindung betrifft ein Continuous-Phase-Modulation-Demodulationsverfahren und einen Continuous-Phase-Modulation-Demodulator.

Eine Continuous-Phase-Modulation - CPM - in Deutsch etwa Kontinuierliche Phasenmodulation - ist ein Verfahren zur Modulation von Daten, das allgemein z.B. in drahtlosen Modems verwendet wird. Im Gegensatz zu anderen koherenten digitalen Phasen-Modulations-Technologien, bei denen die Trägerphase bei dem Start jedes Symbols abrupt auf 0 gesetzt wird, wird bei der CPM die Trägerphase in einer kontinuierlichen Weise moduliert. Zum Beispiel springt bei einem Quadrature Phase-Shift Keying (QPSK) der Träger ständig von einem Sinus zu einem Kosinus (d.h. eine Phasenversetzung von 90°), wenn immer einer von zwei Nachrichten-Bits des aktuellen Symbols sich von den beiden Nachrichten-Bits des vorherigen Symbols unterscheidet. Diese Diskontinuität erfordert, dass ein relativ großer Anteil der Leistung außerhalb des erwünschten Bandes auftritt, was zu einer geringen Spektraleffizienz führt. Darüber hinaus ist CPM typischerweise als eine Constant-Envelope-Wellenform implementiert, d.h. die gesendete Trägerleistung ist konstant. Deswegen ist CPM attraktiv, da die Phasenkontinuität zu einer hohen Spektraleffizienz führt und die Constant-Envelope zu einer exzellenten Leistungseffizienz führt. Der hauptsächliche Nachteil ist die hohe Implementationskomplexität, die für einen optimalen Empfänger benötigt wird.

Diesem Problem wendet sich die Erfindung zu.

Die Erfindung betrifft eine Hardware-effiziente Continuous-Phase-Modulation-Demodulator-Architektur.

Die Hardware-Komplexität von Continuous-Phase-Modulation-Demodulatoren (CPM-Demodulatoren) wird oft als nachteilig im Vergleich zu anderen Modulationsfamilien angesehen. Ein Grund dafür ist z.B. die Intersymbol-Interferenz, die bei der Demodulation berücksichtigt werden muss, wenn die Bit-Fehlerrate (BER) möglichst nah am theoretischen Limit liegen soll.

Es gibt verschiedene Ansätze zur Approximation der Demodulation, die gleichzeitig zu geringeren Hardware-Komplexitäten führen können, z.B. Pulse Truncation - siehe

Referenz [1]:   Balachandra Kumaraswamy "Simplified 2-State Detectors for SOQPSK, Military Communications (MILCOM) Conference, Orlando, Florida, October 2007

sowie

Referenz [2]:   Balachandra Kumaraswamy "Applications of PAM representation of CPM - Master Theses Defence" vom 26. Februar 2008, Universität von Kansas.

Ein weiterer Ansatz ist Durchführung einer Viterbi-Detektion als effiziente Implementierung der "maximum likelihood sequence detection" des Signals. Der nächstliegendste Stand der Technik hierzu ist

Referenz [3]:   E. Hosseini, E. Perrins "FPGA Implementation of a Coherent SOQPSK-TG Demodulator", Military Communications Conference, 2011 - Track 1 - Waveforms and Signal Processing - S. 471 ff.

Aus der Referenz [3] sind ein Verfahren und eine Vorrichtung gemäß den Oberbegriffen der beigefügten unabhängigen Patentansprüche bekannt.

Ausgehend von diesem Stand der Technik nach [3] liegt der Erfindung die Aufgabe zugrunde, die Hardware-Architektur von CPM-Demodulatoren noch weiter zu vereinfachen, ohne die Bit-Fehlerrate merklich zu beeinflussen.

Insbesondere soll eine geringe Hardware-Komplexität bei gleichzeitiger optimaler Bit-Fehlerrate der Übertragung geschaffen werden. Dies ist besonders vorteilhaft für fliegende, Energie-beschränkte Plattformen.

Zur Lösung schlägt die Erfindung ein Demodulationsverfahren und eine Demodulationsvorrichtung gemäß den unabhängigen Ansprüchen vor.

Vorteilhafte Ausgestaltungen der Erfindung sind Gegenstand der Unteransprüche.

Die Erfindung schafft gemäß einem ersten Aspekt ein Continous-Phase-Modulation-Demodulationsverfahren zum Demodulieren eines mit koninuierlicher Phasenmodulation modulierten CPM-Signals, umfassend Durchführen einer Phasenkorrektur, Durchführung einer Optimalfilterung mittels eines Optimalfilters, und Durchführen einer Maximum-Likelihood-Sequence-Detektion des Signals, wobei die Optimalfilterung vor der Phasenkorrektur durchgeführt wird und/oder wobei bei der Optimalfilterung anstelle von Multiplikationen Summen von Bruchteilen von 2 verwendet werden.

Es ist bevorzugt, dass das Demodulationsverfahren in Takten durchgeführt wird und dass die Optimalfilterung und die Phasenkorrektur innerhalb eines Taktes durchgeführt werden.

Es ist bevorzugt, dass das Demodulationsverfahren mit einer Überabtastrate weniger als 16, insbesondere weniger als 8, durchgeführt wird.

Ein bevorzugtes Demodulationsverfahren ist gekennzeichnet durch den zuerst durchzuführenden Schritt Durchführen einer Analog-zu-Digital-Umwandlung.

Eine bevorzugte Ausführungsform des Demodulationsverfahrens ist gekennzeichnet durch Aufstapeln mehrerer Signalwerte, um die Signalwerte parallel zu verarbeiten.

Eine bevorzugte Ausführungsform des Demodulationsverfahrens ist gekennzeichnet durch Durchführen einer Zeitfehlererkennung und einer Zeitfehlerabschätzung innerhalb eines Takts und Durchführen einer Zeitfehlerkorrektur aufgrund der Zeitfehlerabschätzung.

Gemäß einem weiteren Aspekt schafft die Erfindung einen Continous-Phase-Modulation-Demodulator zum Demodulieren eines mit kontinuierlicher Phasenmodulation modulierten CPM-Signals, umfassend eine Phasenkorrektureinrichtung zur Durchführung einer Phasenkorrektur, eine Optimalfiltereinrichtung zur Durchführung einer Optimalfilterung und eine Maximum-Likelihood-Sequence-Detektionseinrichtung zur Durchführung einer Maximum-Likelihood-Sequence-Detektion, wobei die Optimalfiltereinrichtung vor der Phasenkorrektureinrichtung angeordnet ist, um die Phasenkorrektur nach der Optimalfilterung durchzuführen, und/oder wobei die Optimalfiltereinrichtung derart ausgebildet ist, dass sie anstelle einer Multiplikation eine Summe von Bruchteilen von 2 bildet.

Es ist bevorzugt, dass der Demodulator zum Taktbetrieb ausgebildet ist und die Optimalfiltereinrichtung und die Phasenkorrektureinrichtung zum Verarbeiten von Signalwerten innerhalb desselben Takts ausgebildet sind.

Es ist bevorzugt, dass der Demodulator zum Durchführen eines Demodulationsverfahrens an dem CPM-Signal mit einer Überabtastrate von weniger als 16, vorzugsweise von weniger als 8, ausgebildet ist.

Ein bevorzugter Demodulator ist gekennzeichnet durch eine Aufstapeleinrichtung zum Aufstapeln mehrerer Signalwerte, um diese parallel zu verarbeiten.

Ein bevorzugter Demodulator ist gekennzeichnet durch einen Analog/Digitalwandler zum Umwandeln eines analogen CPM-Signals in ein zu demodulierendes digitales CPM-Signal.

Ein bevorzugter Demodulator ist gekennzeichnet durch eine Zeitfehlererkennungs- und -abschätzungseinrichtung zur Erkennung eines Zeitfehlers und zur Abschätzung des Zeitfehlers innerhalb eines Takts und durch eine Zeitfehlerkorrektureinrichtung zur Zeitfehlerkorrektur aufgrund der Abschätzung des Zeitfehlers durch die Zeitfehlererkennungs- und -abschätzungseinrichtung.

Gemäß einem weiteren Aspekt schafft die Erfindung ein Fluggerät oder ein Raumfahrtgerät, umfassend einen Demodulator nach einer der zuvor erläuterten Ausgestaltungen.

Zur Vereinfachung von Hardware-Architekturen für CPM-Demodulatoren nutzt die Erfindung gemäß einer ersten Alternative insbesondere eine mathematische Äquivalenzumformung des bisherigen Demodulator-Algorithmus zur Zusammenfassung von Rechenschritten an effizienten Stellen.

Gemäß einer weiteren Alternative werden bei bevorzugten Ausgestaltungen der Erfindung einige oder alle Multiplizierer im Demodulator durch Schaltungen mit geringerer Komplexität ersetzt. Insbesondere wird ein Optimalfilter-Englisch: "matched filter" - ohne Multiplizierer eingesetzt.

Bei weiteren Ansätzen vorteilhafter Ausgestaltungen der Erfindung wird die Überabtastrate unter Beachtung der Bit-Fehlerrate BER gering gehalten, um die Anzahl der Berechnungen zu verringern.

Bei weiteren bevorzugten Ausgestaltungen der Erfindung wird eine grobe Pipeline-Architektur mit "Single-Registered-Processing-Units" genutzt.

Durch vorteilhafte Ausgestaltungen des CPM-Demodulationsverfahren sowie des CPM-Demodulators konnte die Hardware-Effizienz, insbesondere die Bits/Hardware-Komplexität, in einer Beispiel-FPGA-Implementierung im Vergleich zu Implementierungen in der eingangs genannten Literatur [3] in etwa verdoppelt werden. Die neue Architektur lässt sich für Wellenformen der Familie CPM anwenden und ermöglicht somit die Vorteile von CPM, insbesondere Spektrum-Effizienz, Energie-Effizienz, Robustheit und Zuverlässigkeit, auch für Energie-beschränkte und Hardware-beschränkte Systeme, wie insbesondere Energie-beschränkte und Hardware-beschränkte fliegende Systeme, einsetzen zu können. Beispiele für derartige Energie-beschränkte und Hardware-beschränkte fliegende Systeme sind HAPS (High Altitude Pseudo-Satellites, z.B. das System Zephyr von Airbus Defence and Space) oder UAVS. Weitere Verwendungsbeispiele sind CNPC-Links, Telemetrie-Links, SATCOM-Links usw.

Im Folgenden wird die Erfindung anhand der beigefügten Zeichnungen näher erläutert. Dabei zeigen:

Fig. 1     ein Blockdiagramm eines CPM-Demodulators nach dem Stand der Technik zur Erläuterung des technologischen Hintergrunds der Erfindung;

Fig. 2     ein Blockdiagramm eines Optimalfilters des bekannten CPM-Demodulators zur Erläuterung des technologischen Hintergrunds der Erfindung;

Fig. 3     ein Blockdiagramm eines Ausführungsbeispiels des CPM-Demodulators gemäß der Erfindung;

Fig. 4     ein Blockdiagramm eines Ausführungsbeispiels des CPM-Demodulators gemäß der Erfindung, ausgebildet als Single-Register-Processing-Unit;

Fig. 5    ein Blockdiagramm einer Anhäufungseinrichtung einer Ausgestaltung des CPM-Demodulators gemäß der Erfindung.

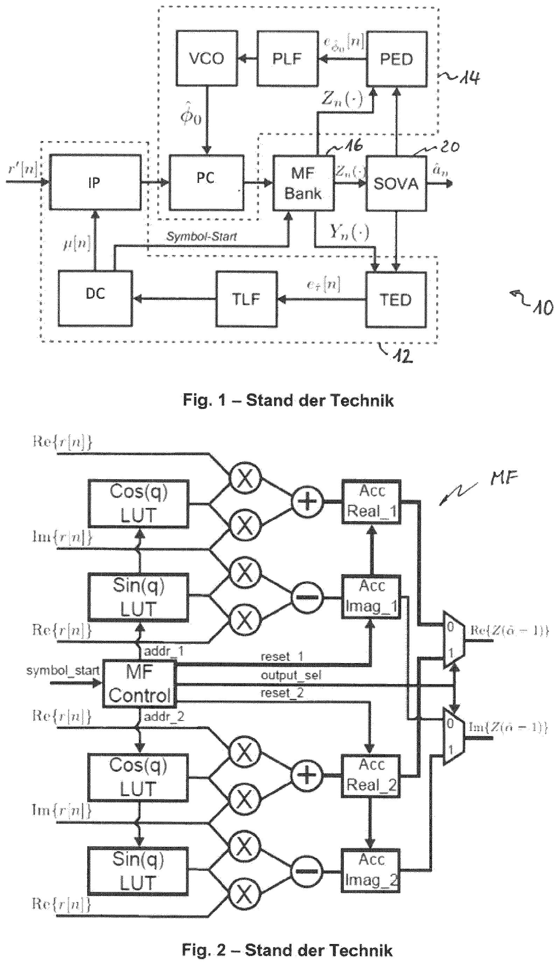

In Fig. 1 ist ein Blockdiagramm eines CPM-Demodulators 10 nach dem Stand der Technik gemäß der Referenz [3] gezeigt, wie er in einem Field Programmable Gate Array (FPGA) implementiert werden kann. Ein FPGA ist ein integrierter Schaltkreis der Digitalschaltung, in den eine logische Schaltung programmiert werden kann. Der CPM-Demodulator 10 ist für ein Shaped Offset Quadrature Phase Shift Keying (SOQPSK) ausgebildet und ist auf Basis einer Maximum Likelihood Sequence Detection von SOQPSK unter Verwendung eines Viterbi-Alogrithmus VA, insbesondere eines Soft-Output Viterbi-Alogrithmus (SOVA), ausgebildet. Für nähere Einzelheiten wird auf die Referenz [3] verwiesen.

In dem bekannten CPM-Demodulator 10 wird ein CPM-Demodulationsverfahren in Takten ausgeführt, wobei der entsprechend verarbeitete Signalwert pro Takt von einem Block zu dem nächsten weitergegeben wird.

Zunächst wird in einem nicht dargestellten Analog-zu-Digital-Wandler das Signal r(t) zu dem digitalen Signal r' [n] umgewandelt und dann einer Zeitkorrektur in einem Interpolator IP und dann einer Phasenkorrektur in einem Phasenkorrektor PC zugeführt.

Der Interpolator IP ist Teil einer Zeitkorrektureinrichtung 12, die als Zeit-Phase-Lock-Loop (Timing PLL) ausgebildet ist. Diese Zeitkorrektureinrichtung 12 enthält weiter eine Zeitfehlerdetektionseinrichtung TED (Timing Error Detection), einen Zeitschleifenfilter TLF (Timing Loop Filter) und einen Dekrementzähler DC (Decrementary Counter).

Der Phasenkorrektor PC ist Teil einer Phasenkorrektureinrichtung 14. Diese enthält im Stand der Technik weiter einen Phasenfehlerdetektor PED (Phase Error Detector), einen Phasenschleifenfilter (PLF) und einen spannungsgesteuerten Oszillator VCO (Voltage Controlled Oscillator) und ist als Phasenregelschleife ausgebildet.

Von dem Phasenkorrektor PC wird das Signal einer Optimalfiltereinrichtung (Englisch: Matched Filter) 16 zugeführt, die eine Matched Filter Bank aufweist, um für jedes mögliche Symbol einen Optimalfilter oder Matched Filter MF zur Verfügung zu haben.

Das Signal $Z_n$ (.) aus der Optimalfiltereinrichtung 16 wird einerseits dem Phasenfehlerdetektor PED zugeführt, der daraus einen Wert $e_\phi$ [n] für den Phasenfehler generiert, um diesen dem Phasenschleifenfilter PLF zuzuführen. Der spannungsgesteuerte Oszillator VCO erzeugt daraus einen abgeschätzten Phasenfehler $\Phi_0$, der dem Phasenkorrektor PC zugeführt wird, um die Phase zu korrigieren.

Die Ableitung $Y_n$ (.) des Signals aus der Optimalfiltereinrichtung 16 wird der Zeitfehlerdetektionseinrichtung TED zugeführt, die daraus ein Zeitfehlersignal $e_t$ [n] erzeugt und über den Zeitschleifenfilter ZLF dem Dekrementzähler DC zuführt. Die Zeitfehlerdetektionseinrichtung TED berechnet ein Zeitfehlersymbol, das anzeigt, wie weit das Timing von der korrekten Zeit abweicht. Der Dekrementzähler DC sorgt für ein Schätzsymbol N [n], um den Zeitfehler abzuschätzen. Dieses Schätzsymbol N [n] wird dem Interpolator IP zugeführt, der einen Gegenmechanismus darstellt, um den Zeitfehler zu korrigieren.

Durch mehrfaches Durchlaufen der Phasenregelschleife der Phasenkorrektureinrichtung 14 wird der Phasenfehler minimiert. Durch mehrfaches Durchlaufen der Zeitkorrekturschleife der Zeitkorrektureinrichtung 12 wird der Zeitfehler minimiert. Die Optimalfiltereinrichtung 16 enthält Optimalfilter (Englisch: Matched Filter) MF. Dies sind Filter, welche ein Signal-Rausch-Verhältnis optimieren. Das Optimalfilter MF dient zur optimalen Bestimmung des Vorhandenseins der Amplitude oder der Lage einer bekannten Signalform in Gegenwart von Störungen. Das Optimalfilter MF versucht, die Signalenergie zu maximieren.

Die aus der Referenz 1 bekannte Ausgestaltung des Optimalfilters ist in Fig. 2 dargestellt. Wie ersichtlich, werden aus den Imaginärteilen und den Realteilen des in der Phase und der Zeit korrigierten Signals r [n] Multiplikationen durchgeführt, um den Realteil und den Imaginärteil des am wahrscheinlichsten gesendeten Signals Z (.) zu erzeugen.

Dieser Ausgang $Z_n$ (.) wird einer Maximum-Likelihood-Sequence-Detektionseinrichtung 20 zum Durchführen einer Maximum-Likelihood-Sequence-Detektion zugeführt. Die Maximum-Likelihood-Sequence-Detektionseinrichtung 20 ist beispielsweise als Viterbi-Detektionseinrichtung VA zum Durchführen eines Viterbi-Algorithmus ausgebildet. In dem Beispiel der Referenz 1 ist die Viterbi-Detektionseinrichtung VA als Einrichtung SOVA zum Durchführen eines Soft-Output Viterbi-Algorithmus ausgebildet. Es wird somit in der Literatur ein CPM-Demodulator 10 mit Phasensynchronisation und Zeitsynchronisation vorgeschlagen. Die digitalen Signale r' [n] stammen aus einer Überabtastung des analogen Signals r(t) im Analog-Digital-Umsetzer. Im Stand der Technik wird dabei mit einer Überabtastrate (Oversampling Rate) OSR von 16 gearbeitet. Der CPM-Demodulator 10 führt dabei die folgende Anzahl von tatsächlichen Multiplikationen aus.

| | |
|---|---|
| Interpolator: | 2 |
| Phasenkorrektor: | 12 |
| Optimalfiltereinrichtung 16 (Matched Filter MF): | 24 |
| Phasenschleifenfilter: | 1 |
| Zeitschleifenfilter: | 1 |

(fortgesetzt)

| Also insgesamt: | 40 |
|---|---|

Insbesondere zeigt Fig. 2, dass in einem Optimalfilter MF zur Behandlung der komplexen Multiplikationen vier reelle Multiplikationen durchzuführen sind.

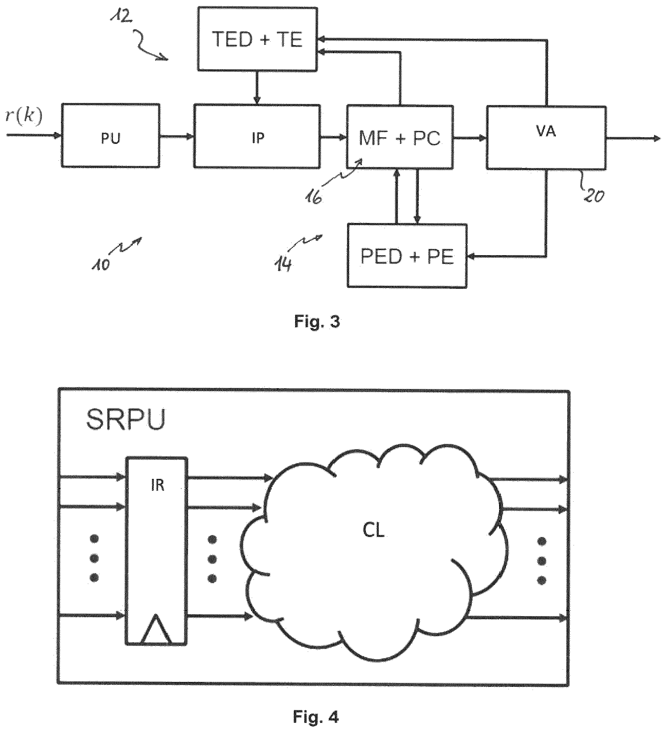

Im Folgenden werden anhand der Darstellungen in den Fig. 3 bis 5 vorteilhafte Ausgestaltungen von Hardware-effizienten Demodulator-Architekturen für eine CPM näher erläutert.

Fig. 3 zeigt dabei ein Blockdiagramm des CPM-Demodulators 10 mit optionaler Phasenkorrektur und Zeitkorrektur.

Auch der Fig. 3 ist ein nicht dargestellter Analog-Digital-Wandler, der entsprechend einer ausgewählten Überabtastrate OSR einen Takt vorgibt, um das digitale Signal r (k) zu erzielen, vorgeschaltet. Auch bei dieser Ausgestaltung werden, wie zuvor erläutert, pro Takt die Werte von einem Block zum nächsten weitergegeben.

Der CPM-Demodulator 10 gemäß der Ausführungsform der Erfindung weist eine Aufstapeleinrichtung PU (Pile up-Unit), einen Interpolator IP, eine Optimalfiltereinrichtung 16, einen Phasenkorrektor PC, eine Maximum-Likelihood-Sequence-Detektionseinrichtung 20, z.B. in Form einer Viterbi-Detektionseinrichtung VA (z.B. SOVA), eine Phasen-Abschätzungseinrichtung PE (Phase Estimator), einen Phasenfehlerdetektor PED, eine Zeitabschätzungseinrichtung TE (Timing Estimator) und einen Zeitfehlerdetektor TED auf.

Die Anhäufungseinrichtung PU ist insbesondere als Reihen-Zu-Parallel-Umwandler für OSR-Werte ausgebildet.

In einem ersten Lösungsansatz zur Verringerung der Hardware-Komplexität wird die Überabtastrate OSR gering gehalten, um die für jedes Symbol notwendige Anzahl von Berechnungen zu minimieren. Dieser Schritt kann leicht durch Simulation verifiziert werden, um sicherzustellen, dass sich die Bit-Fehlerrate nicht verschlechtert.

Der CPM-Demodulator mit der Architektur der Fig. 3 wurde als SOQPSK-Demodulator in einem FPGA implementiert und getestet. Es stellte sich heraus, dass eine Überabtastrate von weniger 16 und insbesondere weniger 8 möglich ist und dass mehr insbesondere eine Überabtastrate von 4 ausreichend ist.

Als zweiter Lösungsansatz wird für den CPM-Demodulator 10 eine grobe Pipeline-Struktur mit "Single-Registered-Processing-Units" SRPU verwendet. Dies ist in Fig. 4 dargestellt. Die Eingangssignale werden in Eingangsregister IR registriert und parallel durch die kombinatorische Logik CL verarbeitet und als Ausgangssignal ausgegeben.

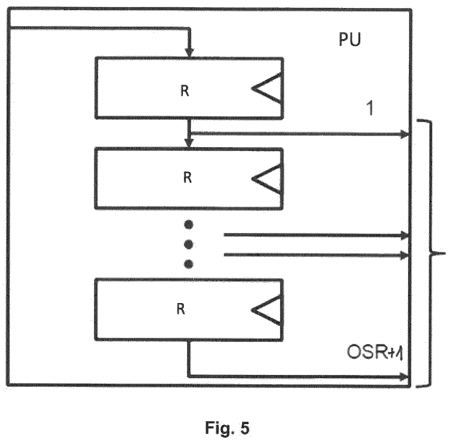

Die Struktur der Anhäufungseinrichtung PU ist in Fig. 5 wiedergegeben. Diese weist eine Reihe von Registern R auf, in denen die OSR-Werte gesammelt daraufhin parallel verarbeitet werden.

Demnach werden alle Eingangssignale registriert und die Berechnung der Ausgangssignale wird im Teil der kombinatorischen Logik CL durchgeführt.

Die Pile up-Unit - Anhäufungseinrichtung PU - wird als erste Stufe vorgesetzt, um die OSR-Werte in einem Zyklus parallel zu verarbeiten.

Am Ausgang der Anhäufungseinrichtung PU stehen alle Werte eines kompletten Symbols an, die man als Einheit zur Verfügung haben möchte. Die Anzahl der Werte ergibt sich aus der Überabtastrate OSR + 1. Bei einer Überabtastrate OSR von 4 werden somit fünf Werte parallel verarbeitet.

Entsprechend stehen OSR+1 Register R zur Verfügung, die innerhalb von OSR+1 Takten gefüllt werden, um dann die OSR+1 Werte parallel zur kombinatorischen Logik CL weiterzuleiten.

Die entsprechenden Werte werden dann parallel auf den Interpolator IP gegeben. Der Interpolator IP hat die gleiche Funktion wie im zuvor erläuterten Stand der Technik. Er bildet einen Gegenmechanismus, um den Zeitfehler zu minimieren.

Die Realisierung ist jedoch anders, da eine parallele Bearbeitung der aufgesammelten Werte des Symbols erfolgt.

Der Interpolator IP ist auch hier Teil einer Zeitkorrektureinrichtung 12, wobei allerdings eine Zeitfehlerabschätzung TE und eine Zeitfehlererfassung TED innerhalb eines Takts zusammen zusammengefasst sind. Die Zeitfehlerdetektion TED und die Zeitfehlerabschätzung TE erfolgt innerhalb eines Symbols, z.B. bei einer Abtastrate von 4 innerhalb von 4 Takten. Daher sind diese Operationen zusammengefasst, damit weniger Zeit benötigt wird.

Ein dritter Lösungsansatz besteht in einer äquivalenten Transformation des Algorithmus, um die Berechnung dahin zu verschieben, wo sie effizienter durchgeführt werden kann.

In dem in Fig. 3 dargestellten Ausführungsbeispiel ist der Optimalfilter MF dem Phasenkorrektor PC vorgeschaltet. Somit ist der Optimalfilter MF gegenüber dem Stand der Technik verschoben. Die Phasenkorrektur erfolgt hinter dem Optimalfilter. Dies ist vom Ergebnis her äquivalent, bringt aber bedeutend geringere Komplexität.

Während mit dem bekannten CPM-Demodulator 10 gemäß Fig. 1 eine Optimalfilterung in Form von

Ausdruck (1): $\qquad \sum\limits_{i=1-OSR} c \cdot r_i \cdot b_i$

erfolgte, wobei OSR die Abtastrate, c den Korrekturkoeffizienten, $r_i$ den Symbolwert und $b_i$ den Filterkoeffizienten darstellt und somit jedes $r_i$ gedreht wird, um Phasenkorrekturen durchzuführen, erfolgt bei der Erfindung eine Verarbeitung gemäß dem Ausdruck (2):

$$c \cdot \sum\limits_{i=1-OSR} r_i \cdot b_i$$

Demnach erfolgt eine Drehung an den bereits gefilterten Werten. Die Komplexität wird bei der Erfindung um den Faktor der Abtastrate OSR verringert.

Die digitalen Werte eines CPM-Signals mit Phasenverschiebung können beschrieben werden durch

Ausdruck (3): $\qquad r(k) = s(kT)\exp(-j\phi)$,

wobei s(kT) die abgetastete Version des gesendeten CPM-Signals und $\Phi$ die Phasenverschiebung-Abschätzung ist.

Optimalfilterung wird verwendet, um die Information für die Viterbi-Dekodierung, Zeitfehlerabschätzung und Phasenfehlerabschätzung zu extrahieren und wird realisiert durch eine Multiplikation von r(k) mit Optimalfilterkoeffizienten (bei der konventionellen Verfahrensweise). Es ist gemäß dem Kommutativgesetz gleichwertig, das Optimalfiltern an s(kT) zuerst durchzuführen und danach die Phase durch eine Multiplikation mit exp(-j$\Phi$) zu korrigieren (Austauschverfahren). Der Vorteil des Austauschverfahrens wird im Folgenden skizziert:

- Bei dem konventionellen Verfahren:

  Bei Verwenden einer Phasentrunkierung erfordert ein Optimalfilterausgang OSR komplexe Multiplikationen des phasenkorrigierten Signals und der komplexen Filterkoeffizienten. Ist die Überabtastrate OSR z.B. 16, werden somit 16 komplexe Multiplikationen verlangt.

  So muss jeder der OSR Signalwerte durch eine komplexe Multiplikation mit exp(-j$\Phi$) korrigiert werden.

- Bei dem Austauschverfahren:

  Bei Verwenden einer Phasentrunkation erfordert ein Optimalfilterausgang OSR- komplexe Multiplikationen des unkorrigierten Signals. Eine Phasenkorrektur wird danach an den Optimalfilterausgang mit nur einer komplexen Multiplikation mit exp(-j$\Phi$) durchgeführt.

Dieser dritte Lösungsansatz reduziert somit die Anzahl der erforderlichen Multiplikationen. Dabei ist es wichtig anzumerken, dass der CPM-Demodulator nicht nur einen Optimalfilter, sondern mehrfache Optimalfilter verwendet, was die Rechenersparnis dieses Lösungsansatzes erhöht.

Demnach ist gemäß einer Ausgestaltung der Erfindung vorgesehen, dass die Optimalfilterung vor der Phasenkorrektur durchgeführt wird bzw. die Optimalfiltereinrichtung MF vor der Phasenkorrektureinrichtung PC angeordnet ist, um die Phasenkorrektur nach der Optimalfilterung durchzuführen.

Gemäß einem vierten Lösungsansatz werden einige oder alle Multiplizierer im CPM-Demodulator durch Schaltungen mit geringer Komplexität ersetzt.

  a) Ersetzen von Multiplizierern im Optimalfiler MF:

  Die Berechnung einer Optimalfilterantwort benötigt OSR komplexe Multiplikationen der Form

Ausdruck (4): $\qquad MF = \sum\limits_{i=1-OSR} r(i) \cdot \exp(jq_i)$

Eine Idee des vierten Lösungsansatzes ist es, die Faktoren $\exp(jq_i)$ durch Annäherungen zu ersetzen, die helfen, den Maximalfilterausgang ohne Multiplikation zu berechnen. Gemäß einem Lösungsansatz wird $\exp(jq_i)$ untersucht, um Realteile und Imaginärteile aufzufinden, die Summen von Bruchteilen von 2 sind. Zum Beispiel ließe sich ein Faktor 0,75 aufteilen in die Summe von 0,5 + 0,25, also die Summe von ½ + ¼. Dann kann das Filtern durchgeführt werden durch einfache Bit-Verschiebungen (was äquivalent zu einer Multiplikation mit einem Bruchteil von 2 ist) und Additionen. Die Anzahl von benötigten Bruchteil-von-2-Koeffizienten zum Annähern der Faktoren $\exp(jq_i)$ kann durch Simulationen erhalten werden. Das Ziel ist, die Anzahl der Koeffizienten ohne Verschlechterung der BER-Performance zu minimieren. Bei der oben bereits erwähnten Testversion der SOQPSK-Implementation waren zwei Koeffizienten jeweils für den Realteil und den Imaginärteil ausreichend.

Darüber hinaus gibt es viele Symmetrien in den Koeffizienten, was die Anzahl der Koeffizienten weiter reduzieren hilft.

b) Ersetzen von Multiplizierern im Phasenkorrektor PC:

Alternativ oder zusätzlich zu der oben angewandten Ersetzung von Multiplikationen bei der Optimalfilterung können auch Phasenkorrekturmultiplikationen leicht durch auf einem CORDIC-Algorithmus basierenden Phasendrehungen ersetzt werden.

c) Ersetzen von Multiplizierern in Zeitfilter und Phasenfilter:

Auch die Multiplikationen in dem Zeitfilter und dem Phasenfilter können unter Verwendung von Power-of-Two-Zeitfilterkoeffizienten und Power-of-Two-Phasenfilterkoeffizienten durch Bit-Verschiebungen ersetzt werden. Die Ausgestaltung ist vergleichbar wie oben in Bezug auf die Multiplikationen für das Optimalfilter erläutert.

d) Ersetzen von Multiplizierern im Interpolator IP:

In der Theorie können auch Multiplikationen in dem Interpolator IP durch CORDIC-Multiplikatoren ersetzt werden. Dies kann unter Umständen einen Negativeinfluss auf das Timing haben; daher sind die oben genannten Ersetzungen a), b) und c) von Multiplikationen in dem Optimalfilter, im Phasenkorrektor und in dem Zeitfilter und dem Phasenfilter bevorzugt.

Im Allgemeinen ist ein vollständig Multiplikator-freier Demodulator 10 möglich. Die Auswahl der oben genannten Ersetzungen von Multiplikatoren sollte anhand einer Abwägung von Vor- und Nachteilen hinsichtlich Komplexitätsverringerung und Timing erfolgen.

Bei der testweisen SOQPSK-FPGA-Implementierung sind die Ersetzungen a), b) und c) der Multiplikatoren in den Optimalfiltern, den Phasenkorrektoren und den Zeitfiltern und Phasenfiltern verwendet worden.

Zuvorstehend ist eine Auswahl von vier Lösungsansätzen für einen Hardware-effizienteren CPM-Demodulator 10 angegeben worden. Eine Selektion aller Maßnahmen kann als Werkzeugkasten zum Verbessern von Teilen oder der gesamten Architektur des CPM-Demodulators 10 erfolgen.

Mit der bereits erwähnten getesteten FPGA-Implementation eines SOQPSK-Demodulators, ist eine Architektur mit 20 Multiplizierern - im Gegensatz zu 40 bezüglich der Referenz [3] - und einer Hardware-Komplexitätsverbesserung grob um den Faktor 2 erreicht worden. Dies zeigt, dass eine Korrelation zwischen der Anzahl von Multiplizierern und der Hardware-Effizienz besteht.

Insgesamt ist in dem Testkonzept Folgendes erzielt worden:

Überabtastrate OSR = 4

| Anzahl der reellen Multiplikationen: | |
|---|---|
| Im Interpolator: | 8 |
| Im Phasenkorrektor | 12 |
| Im Optimalfilter | 0 |
| Im Phasenschleifenfilter | 0 |
| Im Zeitschleifenfilter | 0 |
| **Insgesamt:** | **20** |

**Bezugszeichenliste:**

| | |
|---|---|
| 10 | CPM-Demodulator |
| 12 | Zeitkorrektoreinrichtung |
| 14 | Phasenkorrektureinrichtung |
| 16 | Optimalfiltereinrichtung |
| 20 | Maximum-Likelihood-Sequenz-Detektionseinrichtung |
| MF | Optimalfilter |
| IP | Interpolator |
| PC | Phasenkorrektor |
| TED | Zeitfehlerdetektionseinrichtung |
| TLF | Zeitschleifenfilter |
| DC | Dekrementzähler |
| PED | Phasenfehlerdetektor |
| VA | Viterbi-Detektionseinrichtung |
| SOVA | Einrichtung zum Durchführen eines Soft-Output-Viterbi-Algorithmus |
| PU | Anhäufungseinrichtung |
| SRPU | Single-Register-Processing-Unit |
| IR | Eingangs-Register |
| CL | kombinatorische Logik |
| R | Register |
| OSR | Überabtastrate |

**Patentansprüche**

1. Continous-Phase-Modulation-Demodulationsverfahren zum Demodulieren eines mit koninuierlicher Phasenmodulation modulierten CPM-Signals, umfassend:

   Durchführen einer Phasenkorrektur,
   Durchführung einer Optimalfilterung mittels eines Optimalfilters (MF), und
   Durchführen einer Maximum-Likelihood-Sequence-Detektion des Signals,
   **dadurch gekennzeichnet,**
   **dass** die Optimalfilterung vor der Phasenkorrektur durchgeführt wird,
   und/oder
   **dass** bei der Optimalfilterung anstelle von Multiplikationen Summen von Bruchteilen von 2 verwendet werden.

2. Demodulationsverfahren nach Anspruch 1,
   **dadurch gekennzeichnet,**
   **dass** das Demodulationsverfahren in Takten durchgeführt wird und dass die Optimalfilterung und die Phasenkorrektur innerhalb eines Taktes durchgeführt werden.

3. Demodulationsverfahren nach einem der voranstehenden Ansprüche,
   **dadurch gekennzeichnet,**
   **dass** das Demodulationsverfahren mit einer Überabtastrate (OSR) weniger als 16, insbesondere weniger als 8, durchgeführt wird.

4. Demodulationsverfahren nach einem der voranstehenden Ansprüche, **gekennzeichnet durch** den zuerst durchzuführenden Schritt:

   Durchführen einer Analog-zu-Digital-Umwandlung.

5. Demodulationsverfahren nach einem der voranstehenden Ansprüche, **gekennzeichnet durch** Aufstapeln mehrerer Signalwerte, um die Signalwerte parallel zu verarbeiten.

6. Demodulationsverfahren nach einem der voranstehenden Ansprüche, **gekennzeichnet durch** Durchführen einer Zeitfehlererkennung (TED) und einer Zeitfehlerabschätzung innerhalb eines Takts und Durchführen einer Zeitfehlerkorrektur aufgrund der Zeitfehlerabschätzung.

7.  Continous-Phase-Modulation-Demodulator (10) zum Demodulieren eines mit kontinuierlicher Phasenmodulation modulierten CPM-Signals, umfassend:

    eine Phasenkorrektureinrichtung (14) zur Durchführung einer Phasenkorrektur,
    eine Optimalfiltereinrichtung (16) zur Durchführung einer Optimalfilterung und
    eine Maximum-Likelihood-Sequence-Detektionseinrichtung (20) zur Durchführung einer Maximum-Likelihood-Sequence-Detektion,
    **dadurch gekennzeichnet,**
    **dass** die Optimalfiltereinrichtung (16) vor der Phasenkorrektureinrichtung (14) angeordnet ist, um die Phasenkorrektur nach der Optimalfilterung durchzuführen,
    und/oder
    **dass** die Optimalfiltereinrichtung (16) derart ausgebildet ist, dass sie anstelle einer Multiplikation eine Summe von Bruchteilen von 2 bildet.

8.  Demodulator (10) nach Anspruch 7,
    **dadurch gekennzeichnet,**
    **dass** der Demodulator (10) zum Taktbetrieb ausgebildet ist und die Optimalfiltereinrichtung (16) und die Phasenkorrektureinrichtung (14) zum Verarbeiten von Signalwerten innerhalb desselben Takts ausgebildet sind.

9.  Demodulator (10) nach einem der Ansprüche 7 oder 8,
    **dadurch gekennzeichnet,**
    **dass** der Demodulator (10) zum Durchführen eines Demodulationsverfahrens an dem CPM-Signal mit einer Überabtastrate (OSR) von weniger als 16, vorzugsweise von weniger als 8, ausgebildet ist.

10. Demodulator (10) nach einem der Ansprüche 7 bis 9,
    **gekennzeichnet durch** eine Aufstapeleinrichtung zum Aufstapeln mehrerer Signalwerte, um diese parallel zu verarbeiten.

11. Demodulator (10) nach einem der Ansprüche 7 bis 10,
    **gekennzeichnet durch** einen Analog/Digitalwandler zum Umwandeln eines analogen CPM-Signals in ein zu demodulierendes digitales CPM-Signal.

12. Demodulator (10) nach einem der Ansprüche 7 bis 11,
    **gekennzeichnet durch** eine Zeitfehlererkennungs- und -abschätzungseinrichtung (TED) zur Erkennung eines Zeitfehlers und zur Abschätzung des Zeitfehlers innerhalb eines Takts und **durch** eine Zeitfehlerkorrektureinrichtung (12) zur Zeitfehlerkorrektur aufgrund der Abschätzung des Zeitfehlers **durch** die Zeitfehlererkennungs- und -abschätzungseinrichtung (TED).

13. Flug- oder Raumfahrtgerät, umfassend einen Demodulator (10) nach einem der Ansprüche 7 bis 12.

**Fig. 1 – Stand der Technik**

**Fig. 2 – Stand der Technik**

Fig. 3

Fig. 4

Fig. 5

Europäisches Patentamt

European Patent Office

Office européen des brevets

**EUROPÄISCHER RECHERCHENBERICHT**

Nummer der Anmeldung

EP 17 15 2049

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EHSAN HOSSEINI ET AL: "FPGA implementation of a coherent SOQPSK-TG demodulator", MILITARY COMMUNICATIONS CONFERENCE, 2011 - MILCOM 2011, IEEE, 7. November 2011 (2011-11-07), Seiten 471-476, XP032092982, DOI: 10.1109/MILCOM.2011.6127715 ISBN: 978-1-4673-0079-7 * Seite 473; Abbildung 2 * * Seite 471, linke Spalte, Zeile 1 - Zeile 3 * * Seite 471, linke Spalte, Zeile 26 - Zeile 29 * * Seite 472, rechte Spalte, Absatz II-B * * Seite 472, linke Spalte, Zeile 20 * * Seite 473, rechte Spalte, Absatz III-A * * Seite 474, rechte Spalte, Absatz III-B * ----- | 1-13 | INV. H04L27/227 H04L27/26 ADD. H04L27/22 H04L27/00 |
| A | EP 0 929 117 A1 (BOSCH GMBH ROBERT) 14. Juli 1999 (1999-07-14) * Abbildung 2 * * Absatz [0008] - Absatz [0010] * * Seite 3, Zeile 40 - Zeile 45 * ----- | 1,7 | |
| A | HUBER J ET AL: "DATA-AIDED SYNCHRONIZATION OF COHERENT CPM-RECEIVERS", IEEE TRANSACTIONS ON COMMUNICATIONS, IEEE SERVICE CENTER, PISCATAWAY, NJ. USA, Bd. 40, Nr. 1, 1. Januar 1992 (1992-01-01) , Seiten 178-189, XP000274963, ISSN: 0090-6778, DOI: 10.1109/26.126719 * Abbildung 1 * ----- | 1,7 | |

RECHERCHIERTE SACHGEBIETE (IPC)

H04L

-/--

Der vorliegende Recherchenbericht wurde für alle Patentansprüche erstellt

| Recherchenort | Abschlußdatum der Recherche | Prüfer |
|---|---|---|
| Den Haag | 11. Mai 2017 | Mostafa, Mohamad |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 17 15 2049

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | WO 03/017605 A1 (BERMAI INC [US]) 27. Februar 2003 (2003-02-27) * Absatz [0032] - Absatz [0039]; Abbildung 3 * ----- | 1,7 | |
| A | US 2002/126771 A1 (LI JUNSONG [US] ET AL) 12. September 2002 (2002-09-12) * Abbildung 2 * * Seite 5, linke Spalte, Zeile 1 - Zeile 25 * * Seite 5, linke Spalte, Zeile 28 - Zeile 31 * * Seite 5, linke Spalte, Zeile 34 - Zeile 43 * ----- | 1,7 | |
| A | Charles E. Cook: "Blue Pelican Java", 1. Januar 2005 (2005-01-01), virtualbookworm.com, TX 77842, US, XP002770036, ISBN: 1-58939-758-4 Seiten 29-1-29-2, * Seiten 29-1 - Seiten 29-2 * ----- | 1,7 | **RECHERCHIERTE SACHGEBIETE (IPC)** |
| A,P | Malek Messai: "Application des signaux CPM pour la collecte de données à grande échelle provenant d'émetteurs faible coût", , 11. Oktober 2016 (2016-10-11), XP055371026, Gefunden im Internet: URL:https://portail.telecom-bretagne.eu/publi/public/fic_download.jsp?id=53301 [gefunden am 2017-05-10] * Seite 8, Zeile 7 * ----- | 3,9 | |

Der vorliegende Recherchenbericht wurde für alle Patentansprüche erstellt

| Recherchenort | Abschlußdatum der Recherche | Prüfer |
|---|---|---|
| Den Haag | 11. Mai 2017 | Mostafa, Mohamad |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 15 2049

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-05-2017

| Im Recherchenbericht angeführtes Patentdokument | Datum der Veröffentlichung | Mitglied(er) der Patentfamilie | Datum der Veröffentlichung |
|---|---|---|---|
| EP 0929117 A1 | 14-07-1999 | DE 19800743 A1<br>EP 0929117 A1 | 15-07-1999<br>14-07-1999 |
| WO 03017605 A1 | 27-02-2003 | US 2003053564 A1<br>US 2007286268 A1<br>WO 03017605 A1 | 20-03-2003<br>13-12-2007<br>27-02-2003 |
| US 2002126771 A1 | 12-09-2002 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **BALACHANDRA KUMARASWAMY.** Simplified 2-State Detectors for SOQPSK. *Military Communications (MILCOM) Conference,* Oktober 2007
- **BALACHANDRA KUMARASWAMY.** Applications of PAM representation of CPM - Master Theses Defence. Universität von Kansas, 26. Februar 2008
- **E. HOSSEINI ; E. PERRINS.** FPGA Implementation of a Coherent SOQPSK-TG Demodulator. *Military Communications Conference,* 2011, 471 ff